# FASCICULE DE BREVET EUROPEEN

(11) **EP 3 040 641 B1**
(45) Date de publication et mention de la délivrance du brevet: **22.11.2017**
(21) Numéro de dépôt: 15290310.0
(22) Date de dépôt: 14.12.2015
(51) Int. Cl.: F24J 3/08, F24F 5/00, F28D 20/00

(54) **DISPOSITIF DE CLIMATISATION MULTISOURCE GÉOTHERMIE SUR MUR DIFFUSIF**
KLIMATISIERUNGSVORRICHTUNG AUF EINER DIFFUSIONSWAND, DIE AUS MEHREREN GEOTHERMIEQUELLEN GESPEIST WIRD
MULTISOURCE GEOTHERMAL AIR-CONDITIONING DEVICE ON DIFFUSIVE WALL

(30) Priorité: 29.12.2014 FR 1403032
(43) Date de publication de la demande: 06.07.2016
(73) Titulaire: Provost, Franck, 14000 Caen (FR)
(72) Inventeur: Provost, Franck, 14000 Caen (FR)
(74) Mandataire: Cabinet Chaillot

(56) Documents cités:
- EP-A1- 0 043 057
- WO-A1-2011/033325
- BE-A5- 1 019 898
- FR-A1- 2 970 723
- JP-A- S5 938 533
- JP-A- S57 127 733
- JP-A- 2006 112 689
- JP-A- 2008 020 160
- US-A- 4 128 204
- HUMM O: "DAS NULLENERGIEHAUS IM ERDREICH", TECHNISCHE RUNDSCHAU, HALLWAG AG, CH, vol. 80, no. 16, 15 avril 1988 (1988-04-15), page 102/103, XP000024766, ISSN: 1023-0823

## Description

L'invention concerne la climatisation passive à faible consommation d'énergie utilisée pour lutter contre la pollution interne et préchauffer ou rafraichir l'air de renouvellement d'un volume appartenant à un bâtiment ou une habitation dans le domaine de la construction neuve ou ancienne.

Le système qui nous intéresse est de type échangeur air-massif de terre proche de la géothermie. Il est utilisé pour alimenter un bâtiment ou une habitation en air neuf en le faisant circuler auparavant dans un conduit enterré qui selon les conditions climatiques refroidit l'air ou le préchauffe en utilisant l'inertie thermique d'une masse de terre. Dans ce cas l'air devient un fluide caloporteur tandis que la canalisation enterrée sert de collecteur échangeur thermique tout en transportant selon un chemin l'air jusqu'aux locaux d'activités ou d'habitations.

Utilisant le principe d'inertie thermique, le système géothermique est d'autant plus efficace que les amplitudes thermiques extérieures journalières sont fortes ou qu'il fait face à des événements climatiques extrêmes de courte durée comme la neige. Le principe géothermique utilise deux oscillations thermiques, celle des saisons été/hiver et celle journalière jour/nuit.

On utilise la variation journalière favorablement, en ce que à faible profondeur, la variation de température est décalée par déphasage dans le temps par rapport à celle de l'air en surface du fait de l'inertie thermique de la terre.

La technique connue du puits canadien nous explique qu'avantageusement avec ce dispositif, l'air de ventilation d'un habitat ne sera pas prélevé directement de l'extérieur à travers des prises d'air, sur murs, portes et fenêtres, d'où une économie de chauffage. De manière classique, le puits canadien consiste à faire transiter un flux d'air neuf provenant de l'extérieur de l'habitat dans des canalisations d'une longueur de 30 mètres minimum enterrées dans le sol à une profondeur entre 1 et 2 mètres avant qu'il ne pénètre dans la maison par un système de ventilation permettant le renouvellement de l'air intérieur à une température supérieure à celle de l'air extérieur.

En effet en hiver, le sol grâce à son inertie thermique, à 1,5 mètre de profondeur est plus chaud que la température extérieure hors sol car le sol a pu se charger en chaleur pendant l'été. L'air froid est alors réchauffé lors de son passage dans ce réseau de canalisation souterraine. Il est connu de l'art que l'hiver par une température de 5°, selon la composition de l'agrégat souterrain, la profondeur d'enfouissement et l'exposition au soleil du terrain, on peut récupérer assez de calories pour préchauffer l'air de 10° à 15° avant son introduction dans l'habitat. Dans les pays froids le rendement est très impressionnant puisqu'on pourra naturellement réchauffer un air extérieur de -15° et l'amener à une température proche 5° dans l'habitat.

La technique connue du puits provençal nous explique que par le même circuit de canalisation que le puits canadien, en période d'été, utilisé cette fois en circuit de refroidissement, l'air dans les canalisations enterrées descendra en température grâce à un échange thermique entre la fraîcheur de la terre profonde chargée pendant l'hiver et la canalisation, en effet l'air circulant dans les canalisations va se refroidir durant tout le trajet avant son insufflation dans l'habitat. Il est connu de l'art ancien que l'été par une température de 30° extérieur, selon la composition de l'agrégat souterrain, la profondeur d'enfouissement et la protection du soleil du terrain par son exposition et ses plantations, on peut récupérer assez de frigories pour refroidir l'air de 10° à 15° avant son introduction dans l'habitat, soit un passage de 30° à 20° jusqu'à 15°.

Description d'une réalisation traditionnelle puits Canadien/Provençal, détail des travaux selon un installateur traditionnel :
- Creusement à la pelleteuse de tranchées entre 1,5 et 3 mètres de profondeur éloignées de toute plantation et construction, placement de canalisation sur un lit de sable compacté en pente régulière de 1° à 3°, de 10 à 15 cm d'épaisseur, de 30 à 50 mètres de longueur en fonction de la surface du terrain et de la nature de la terre. Sur sol peu stable, par exemple sablonneux, il faut systématiquement étayer afin d'éviter un effondrement des tranchées lors de la pose des canalisations d'air. Il existe la pose en ligne droite sur terrain de grande longueur, ou en méandre sur une zone de 30 à 60 m2, ou bien encore en boucle circulaire sur une zone 40 à 80 m2.
- Installation d'une cheminée d'aspiration verticale de prise d'air extérieur en tête du réseau et en fin de réseau juste avant l'arrivée dans l'habitat, un dispositif d'évacuation des condensas positionné souvent dans un vide sanitaire ou un local technique, puis dans la plupart des cas, un système de ventilation mécanique se chargera d'insuffler l'air neuf ainsi réchauffé ou refroidi dans l'habitat.

Les avantages de l'art ancien puits canadien et provençal :
Solution écologique très connue, le puits canadien fonctionne par échange géothermique reconnu performant en l'hiver, ce système passif utilise l'énergie stockée du sol pour préchauffer l'air de la ventilation de la maison et permettre ainsi d'importantes économies de chauffage, l'été en version puits provençal, c'est de l'air frais qu'il apporte en climatisation naturelle.

On peut encore améliorer le dispositif connu en utilisant les calories de l'air vicié expulsé de la maison qui réchaufferont l'air neuf entrant provenant du puits canadien grâce à un système bien connu de ventilation mécanique double flux équipé d'un échangeur thermique à plaque, le flux d'air étant animé dans les deux sens par des ventilateurs électriques.

On peut donc conclure que le puits canadien associé à une ventilation mécanique double flux fait partie de la panoplie indispensable de l'art bioclimatique aussi connu sous l'appellation bâtiment à énergies passives.

Mais ils existent des inconvénients et limites à cet art ancien qu'est le puits canadien en ce que, il n'est jamais certain de pouvoir installer un puits canadien sur son terrain car il existe beaucoup de conditions à ce type d'installation. En effet, on a besoin d'un bon agrégat meuble à inertie réelle, mais aussi de la possibilité de creuser profondément ce qui n'est pas toujours possible, par exemple sur un sol constitué de plaquettes ou de roche, mâchefer, volcanique, sol riche en minerai.

On trouvera la même impossibilité de réaliser du génie civil ou simple terrassement sur des sols fragiles et instables, marécageux, aux sous sols poreux, caverneux, argileux, sablonneux, dotés de galeries, mines, nappes phréatiques, en cela que dans l'art connu du puits canadien la nature du sol est un point bloquant pour l'enfouissement des canalisations.

Un autre inconvénient de l'art connu réside dans le fait qu'il est impossible d'utiliser le système puits canadien ou puits provençal dans des régions sismiques, encore un autre en ce qu'il n'est pas toujours possible de venir greffer un système puits canadien sur une construction ancienne.

Encore un autre inconvénient existe en ce que les travaux d'enfouissement pour une construction neuve ou existante sont coûteux et dégradent l'environnement pour une longue période à cause du passage de la pelleteuse puis de la végétalisation à refaire.

Il existe aussi une limite de performance vite atteinte du système si le climat est peut propice à de grande amplitude de température selon les saisons.

On peut trouver dans anciennes inventions déposées des exemples de géothermie par circulation de liquide caloporteur qui est aussi une solution géothermique connue, il est à noter que l'on peut voir dans le brevet EP2505720A2 qu'il existe un point de similitude à déclarer en ce que l'inventeur parle d'un enfouissement de serpentins en couches horizontales dans un talus faisant circuler un liquide caloporteur en circuit fermé dans des couches de terre en strates séparées par un géotextile, mais seulement l'idée du positionnement d'un récupérateur collecteur de calories dans une butte de terre est commune à l'invention présentée ici. En effet ce brevet est différent de l'invention ici présentée car ce système est basé sur la circulation d'un liquide et non pas d'air comme dans le cas du puits canadien, mais aussi en ce que les serpentins caloporteur du brevet sont horizontaux et non verticaux, et encore qu'il s'agit d'un circuit fermé contrairement au passage d'un flux unidirectionnel comme la présente invention.

Nous pouvons conclure sur l'analyse de l'art antérieur le plus proche de la présente invention qui est du type puits canadien, que, après lecture de toutes les limites et contraintes de l'art connu, nous pouvons dire que se situent principalement dans la limitation des conditions d'implantation géologique, mais aussi dans le coût imcompressible du besoin de terrassement, et enfin dans le faite que l'art antérieur est lourd à mettre en oeuvre avec un rendement limité et incertain car variable en fonction du changement climatique.

La limitation d'utilisation par rapport à la nature du sol profond n'est pas la seule, à savoir que souvent la configuration du terrain n'est pas idéal dans sa forme et dimension de surface au sol, ainsi que l'emplacement de la maison par rapport au terrain qui interdira dans certain cas tout simplement l'implantation.

La présente invention ici présentée apportera une nouvelle solution pour les implantations jusqu'à présent impossibles, car ladite invention permettra sans creuser le sol géologique d'équiper un bâtiment ou une habitation d'un dispositif de climatisation passif sur une base géothermique avec un rendement amélioré grâce à un deuxième apport naturel passif de calories en addition au phénomène géothermique de base par la récupération des calories d'un mur diffusif. L'invention dans le brevet ici présenté va remédier à quelques limitations et inconvénients de l'art ancien en donnant la possibilité de :
- faire baisser les coûts d'implantations des dispositifs géothermiques air/terre, permettre l'utilisation d'une géothermie hors sol géologique naturel, c'est-à-dire la possibilité d'un préchauffage d'air neuf sans la difficulté de creuser le sol et ceci étant applicable à moindre coût sur des habitats anciens,
permettre des installations de préchauffage d'air neuf pour des habitats construits sur des sols fragiles ou instables, y compris dans des zones sismiques,
permettre des installations de préchauffage d'air neuf plus performant car double effet en double gain de 'géothermie sur mur diffusif',
permettre des installations plus optimisées selon les saisons été ou hiver, en positionnant non pas un comme dans l'art ancien mais plusieurs collecteurs de calories ou frigories désolidarisés et différenciés par spécialité d'apport en chauffage ou en rafraichissement dans des zones de terre idéalement placées autour de l'habitat en fonction du rendement maximum été ou hivers recherché,
permettre une modularité en kit évolutif qui rendra possible dans le temps des modifications et extensions des installations géothermiques, grâce à un système évolutif de connexion entre plusieurs collecteurs serpentins reliés entre eux par rapprochement bord à bord ou bien par des canalisations,
permettre de poser des réseaux de grande longueur de canalisation c'est-à-dire de réaliser de grande surface d'échange thermique en un minimum de surface au sol puisque les collecteurs serpentins ont la particularité d'être verticaux et au plus proche des murs de l'habitat dans un mode de réalisation préféré,
permettre des installations de préchauffage et refroidissement d'air neuf sur des petits terrains ou zones très accidentées, zones de forte pente, zones rocheuses, terrains sur lesquelles des installations puits canadien selon l'art l'ancien n'étaient pas possible.

Avantageusement et de façon innovante le collecteur échangeur de calories bi-source dit 'géothermie sur mur diffusif' selon l'invention, récupère non seulement côté terre les calories de la formation massique talutée dans lequel il est enfoui à l'identique de l'art ancien, mais en plus qu'il récupère avantageusement côté mur les calories émises par le mur à diffusion contrôlée sur lequel il est en contact, sachant que le volume diffusant de l'habitat est lui-même réchauffé naturellement de façon passive par les activités humaines dont les calories émises par le corps humain, l'électroménager, les ordinateurs et tous les équipements qui s'échauffent.

Ledit dispositif additionnant ainsi les deux apports calorifiques provenant de l'extérieur et de l'intérieur de l'habitat, en ce que selon la loi de Fourier disant que la température de la terre au contact du mur étant toujours inférieur à celle de la paroi externe du mur, la migration des calories ira du mur vers la terre ainsi le collecteur échangeur inventé ici permettra aux habitations situées sur des sols ou le forage et l'enfouissement en profondeur de canalisation est impossible de se doter d'un moyen de chauffage et climatisation performant et économique, un tel dispositif selon son dimensionnement permettant de chauffer ou climatiser totalement ou partiellement un bâtiment ou une habitation.

Avantageusement le collecteur échangeur selon l'invention devra être fixé en partie basse d'un mur taluté, là où la différence de température avec l'air hors sol est la plus grande, en ceinturage d'un bâtiment, ou bien dans le cas d'une utilisation uniquement dédié au refroidissement le collecteur pourra être détaché du mur en étant par exemple positionné dans d'une butte de terre ou d'un monticule environnant l'habitat, ledit collecteur étant relié par une canalisation.

Le collecteur de calories bi-source dit 'géothermie sur mur diffusif' offre la possibilité de s'ajouter durant la vie de l'habitat neuf ou ancien sans le prévoir à la construction, pour peu que ledit habitat possède au moins un mur qu'il peut taluter par l'apport d'une masse de terre suffisamment massique et inertielle, cet apport à l'art ancien donnant la possibilité de rendre bioclimatique par la géothermie hors sol en un second temps un habitat tout en permettant des évolutions et extensions du dispositif sans difficultés techniques en cas de modification de la maison.

Le collecteur de calories bi-source dit 'géothermie sur mur diffusif' apporte une solution nouvelle à la géothermie en région ou le sous sol géologique est incompatible à une implantation puits canadien traditionnel demandant un enfouissement de canalisation en profondeur, comme dans les cas de : région sismique, sol trop fragile, trop dur, sédimentaire ou volcanique, riches en minerai fer de type mâchefer, plaquettes instables, sous sols poreux, galeries, mines, cavités d'eau, sol marécageux ou tous types de sols impossible à creuser car trop humide, ou bien encore l'invention apporte une solution dans le cas d'un matériau de sous sol de part sa composition pas assez inertiel, ou bien encore dans tous les cas incompatible et interdit avec les règles de l'urbanisme local.

L'invention propose un dispositif qui comprend :
- au moins un collecteur double effet 'géothermie sur mur diffusif' vertical ayant les fonctions de collecteur échangeur de calories dans un sandwich terre/air/mur, le collecteur vertical en forme de serpentin est positionné dans un talus en contrefort d'habitat, il est réalisé dans matériau imputrescible et inerte propice à la non prolifération bactérienne. A savoir que plusieurs collecteurs double effet en serpentins verticaux peuvent se coupler entre eux afin d'augmenter le rendement par augmentation du temps d'échange thermique ainsi donné par l'augmentation des surfaces de contact avec la masse de terre et les murs diffusifs du bâtiment.
- au moins une cheminée de prise d'air sortant du massif de terre connectée à l'entrée du collecteur vertical, cheminée en forme de tube rond ou carré extrudée fixée collée étanchée vissée en entrée du collecteur verticalement ou horizontalement ou selon tout angle lui permettant de sortir de la masse de terre, dotée d'un filtre et d'un tamis grillagé inox à son entrée, ladite cheminée étant réalisée dans un matériau thermoplastique de type PVC ou Polyéthylène ou composite ou inox ou autre répondant à la fonction. Ladite cheminée étant coiffée d'une cloche de préchauffage par effet de serre (amovible en saison chaude) en forme de globe ou de cylindre fixée en extrémité de la cheminée de prise d'air neuf au dessus du filtre, laissant passer un flux d'air à sa basse reliée au tube, ladite cloche en protection des parasites et plantes environnantes étant réalisée dans un matériau verre ou polycarbonate ou thermoplastique noir opaque ou translucide.
- au moins une canalisation de sortie d'air connectée en partie basse à la sortie du collecteur, sortant du mur de terre et passant dans un vide sanitaire ou à travers un mur hors sol, ladite canalisation étant équipée d'un récupérateur de condensas, d'un ventilateur mécanique et d'un filtre positionné en fin de canalisation avant l'entrée de l'air dans un caisson VMC quelconque situé dans un plancher ou mur technique, d'un local technique du bâtiment ou de l'habitat, la canalisation est fortement isolée et le purgeur d'eau de condensation et facilement accessible.
- au moins un mur diffusif en vis-à-vis d'au moins un collecteur double effet. Ledit mur diffusif étant formé de un ou plusieurs caissons étanches alvéolaires et structuraux en matériaux composites synthétiques, de sources minérales ou végétales constitués par exemple de fibre et résine, soit d'une matrice et d'un renfort infusé ou injecté dans un moule rigide ou souple, ou bien encore d'un matériau polymère ou monomère, de thermoplastique ou thermo-durcisseur, ou encore de béton avec ou sans armature métallique, et ceci de façon mono matériaux ou d'un mélange de tous les matériaux précités, pourvu que la cohésion de tous les matériaux apporte le résultat structurel et physique recherché, une étanchéité, une imputrescibilité, une diffusivité.

Lesdits caissons sont de préférence réalisés par une technique d'encapsulage composite dans un moule fermé sachant que le demandeur se donne la possibilité d'utiliser toutes les techniques connues du domaine comme l'injection, l'infusion, le coulage de matière, mais encore la technique de dépose numérique par robot dépose de type portique ou bras de 2 à 5 axes rotatifs ou plus, ladite technique de la dépose en continue bien connue de l'industrie automobile, aéronautique, nautique, d'un ruban ou cordon de fibre pré imprégné de résine polymérisable ou plastique thermodurcissable de diamètre largeur et épaisseur quelconque (exemple : robot Coriolis), ou bien encore toujours selon la technique bien connue des robots de dépose de colle ou de soudure de l'industrie, la dépose d'un boudin de toute forme et de toute taille, de pâte extrudée polymérisable constituée de résine et d'une charge d'origine végétale bio-sourcée de préférence, minérale, synthétique recyclé ou non, mais aussi sans limitation de technologies, la technique de la polymérisation de résine au laser appelé stéréolithographie, ou bien encore le frittage de poudre plastique, polymère ou métallique chargée de particules quelconques en tous matériaux pouvant être aggloméré par un laser ou un champ électromagnétique, techniques bien connues de l'industrie électroménager, automobile, aéronautique, etc.

Une technique de fabrication moins productive mais néanmoins réalisable est à citer car possible dans des pays peu industrialisés et automatisés, selon ce mode de réalisation ledit caisson diffusif selon l'invention ne sera pas rendu étanche et structurel en une seule étape de fabrication mais en deux phases, en ce que après le montage de l'ossature bois, il devra être recouvert dans une seconde étape en atelier composite par une peau stratifiée manuellement ou collée ou infusée ou injectée grâce à un sac jetable.

Lesdits caissons sont obligatoirement ouverts sur l'intérieur du bâtiment de façon à être chargés de matériaux amovibles à inertie et diffusivité comme par exemple de la laine de bois compressée haute densité, des plaques ou billes d'argiles ou tous autres matériaux sans limitation de forme et volume, monolithique ou agrégat, fibre ou mousse, apportant les caractéristiques physiques recherchées, avantageusement l'isolation sera choisie avec une préférence diffusive en hivers et avec une préférence bloquante en été.

Lesdits caissons intègrent des aménagements permettant le passage de gaine de réseau électrique et fluide de façon à ne pas créer de rupture périphérique dans les réseaux existants et de donner la possibilité dans le cas d'une construction neuve de câbler en continu quelque soit le mode constructif ossature bois ou bloc de béton, plâtre, etc.

Lesdits caissons sont refermés à l'intérieur de l'habitat par un panneau décoratif amovible, en tout de sorte de matériau du moment que son caractère diffusif est reconnu.

Ledit panneau de fermeture peut être plein ou micro perforé, en bois, plâtre, résine et fibre, Fermacel, alliage métallique, sandwich thermoplastique et métal, polymère ou monomère, ou toutes sortes de matériaux du moment qu'ils répondent au caractéristiques physiques recherchées par le mur technique diffusif.

La partie de mur technique constituée desdits caissons est insérée et solidarisée de façon structurelle et étanche dans une ouverture en réservation d'un mur d'un bâtiment ou habitat partiellement taluté quelconque, bâtiment construit en ossature bois ou béton, brique, ossature métallique, ou selon toutes sortes de modes constructifs sans limitation du moment que le mur technique diffusif peut y être installé.

A la lecture de ce descriptif on comprend que ce dispositif de climatisation ventilée double effet dit 'géothermie sur mur diffusif' ne peut fonctionner que dans une enceinte de terre talutée contre un collecteur échangeur, ledit collecteur collé à un mur en vis-à-vis dit 'diffusif', contrôlable en inertie et diffusivité, et que ledit collecteur est soit équipé d'un système de ventilation intégré ou couplé à une VMC afin de propulser l'air neuf dans l'habitat.

Ledit mur diffusif dans une utilisation de préchauffage d'air de ventilation, avantageusement sera situé dans la pièce reconnue la plus chaude de la maison grâce à la présence proche de baies vitrées, fenêtres de toit ou d'un poêle à bois ou bien encore tout équipement déjà présent permettant de charger le mur en calorie de façon passive sans consommation d'énergie autre que pour sa vocation primaire.

L'invention propose par ce dispositif collecteur échangeur sur mur diffusif une optimisation inconnu de l'art ancien à ce jour, en ce que avantageusement on peut positionner au moins un collecteur à vocation de préchauffage l'hivers dans le talus le plus absorbeur de calories d'origines solaires l'hivers et le moins exposé aux vents froids, mais aussi au moins un autre collecteur à vocation de rafraichissement l'été dans un autre talus plus frais naturellement et le moins exposé au rayons solaires et vents chauds, il est a noté que dans la configuration rafraichissement ledit collecteur sera avantageusement proche d'un mur quelconque sans obligation d'intégrer les caissons diffusifs selon l'invention, et ceci sans obligation d'être collé au mur.

On installera donc pour un bâtiment ou un habitat une combinaison de dispositifs 'collecteurs sur mur-diffusifs' d'hivers et d'été en quantité nécessaire selon les conditions climatiques de la région habitée et du volume à traiter.

Avantageusement le dispositif 'collecteur sur mur-diffusif' n'entraîne pas de surcoût à la construction par rapport à l'art ancien puits canadien qui oblige à un coût de terrassement profond pour la pose des canalisations, l'installation dudit collecteur dans le massif de terre profite indirectement des travaux incompressibles de nivellement du terrain, de la pose des réseaux d'évacuation des eaux de pluie, des alimentations du terrain en eau et énergies, du modelage du terrain, paysagisme, pelouse et jardin, talutage, haies, allées, en ce que l'invention ne crée pas de surcoût de terrassement pour son installation, en cela nous pouvons dire que l'invention apporte à l'art géothermique puits canadien connu le fait de pouvoir installer de façon plus économique et plus simple que l'art ancien un dispositif géothermique au plus proche du niveau zéro du sol naturel, sans creuser, et ceci sur une petite surface de terrain.

De façon encore plus précise on peut dire que ledit dispositif a été spécialement développé pour des bâtiments ou habitations talutés par une formation massique de terre à haute inertie, apportant ainsi avantageusement une solution auxdites habitations situées sur des terrains de trop faible surface ou sans possibilité de creuser le sol en profondeur rendant impossible le principe traditionnel du puis canadien, en ce que cette innovation majeure est innovante par le fait que :
Partant du principe du puits canadien le système a été amélioré dans son étendu d'implantation et dans son rendement par un phénomène 'double effet', mais aussi que le dispositif collecteur échangeur est évolutif par la possibilité de connecter plusieurs serpentins ensembles allongeant ainsi le parcours de l'air, mais encore qu'il peut être installé hors sol géologique sur plusieurs murs autour du bâtiment optimisant ainsi la fonction chauffage ou rafraichissement.

Il est a rappeler que le dispositif en fonction chauffage doit être associé à un mur diffusif taluté de terre dans un positionnement idéalement vertical, mais encore que ledit collecteur peut aussi être situé en plein talus pour une fonction rafraichissante, et que dans ce cas, afin de garantir l'évacuation des condensas le collecteur doit avoir une inclinaison minimum de 5° entre le point haut de prise d'air et le point bas équipé de la canalisation allant vers une VMC.

Le dispositif est avantageusement conçu pour être en contact avec un mur diffusif, mais il peut aussi être utilisé dans des déclinaisons d'utilisations non limitatives du moment qu'il répond à sa fonction de collecteur de calorie, à savoir que :
On utilise le collecteur double effet ou bi-source comme un radiateur en position vertical dans la majorité des cas ou bien à angulation comprise entre 5° et 90° en serpentin descendant, plaqué sur au moins un mur diffusif d'un bâtiment ou d'un habitat, mais encore que l'on peut aussi dans une variante d'utilisation, utiliser plusieurs collecteurs reliés entre eux en empilage parallèle espacés les uns des autres par une couche de terre, l'ensemble de l'assemblage étant enseveli sous une butte de terre proche de l'habitat suffisamment massive et inertielle hors sol géologique, ledit assemblage de collecteurs empilés étant autonome en ventilation ou relié à une VMC située dans l'habitat.

Le dispositif est conçu pour être recouvert d'au moins 1 m à 2 m d'épaisseur de terre en forme de talus pour obtenir des caractéristiques géothermiques intéressantes et exploitables. Selon un mode de réalisation préféré, les talus géothermiques seront avantageusement formés d'un assemblage de sac rempli d'agrégat vibré compacté communément appelé 'bigbag', étant des contenants en textile technique ou géotechnique de préférence biosourcé ou synthétique de toutes formes et tailles et volumes idéales dotés de boucles de manutention, lesdits contenants facilitant la construction, la déconstruction, les manutentions par des hommes ou par des moyens de levages mécaniques. Ils seront empilés, juxtaposés, alignés ou en en quinconce, lesdits sacs seront bloqués en translation par des palissades de pieux en bois ou par des profilés de béton à semelle, à savoir qu'afin de supprimer les poches d'air néfastes à la géothermie, de la terre fine remplira les interstices entre les sacs, les pieux, les palissades, les profilés béton à semelle et les murs.

En phase finale après l'empilage de tous les sacs constituant le talutage, au moins 1 bâche géotextile sera insérée et fixée par des piquets de bois ou autres systèmes de cloutage dans la construction, de préférence dans la partie proche de la couche végétalisée de surface afin de créer un phénomène de canalisation d'eau de pluie contrôlé, mais aussi un autre phénomène de couvercle respirant retenant un certain taux d'humidité indispensable à une bonne cohésion de l'agrégat en cas de sécheresse prolongée, en ce que ledit couvercle géotextile créé ainsi un ralentissement de la dissipation des calories des talus favorable à une inertie thermique supplémentaire de type barrière à inertie, avantageusement les caractéristiques techniques de la bâche géotextile seront choisis en fonction du climat local sec ou humide, de la forme du terrain, et de l'inertie recherchée.

Le talutage utilisé de cette façon apporte à l'art connu de la géothermie le fait d'utiliser un couvercle géotextile englobant le massif de terre créant ainsi un ralentissement de la dissipation des calories, phénomène additionnel à une inertie thermique naturelle du talus de type barrière à inertie favorable au meilleur rendement d'un collecteur échangeur inséré dans ledit talus.

Le talutage avantageusement apporte à l'art connu de la géothermie et de l'isolation par l'extérieur la nouveauté de pouvoir gérer et régler au niveau voulu la régulation d'isolation, l'inertie et le déphasage thermique en faisant varier l'épaisseur des formations massiques, la densité des volumes en fonction des capacités inertielles des substrats locaux et ceci en fonction du besoin géothermique réchauffant ou rafraichissant, mais aussi que le talutage apporte à l'art connu de la géothermie et de l'isolation par l'extérieur le fait qu'il permet de réaliser une enceinte verticale de terre soutenu par une palissade de bois ou béton à semelle à vocation d'isolation d'habitat bioclimatique avec une emprise au sol moindre qu'un talutage de type colline.

Le talutage utilisé par l'invention utilise idéalement des sacs en forme de cubes déformables ou de parallélépipèdes rectangles en tissu de préférence géotextile de 1 m3 de volume dotés de passants de manutention aux quatre coins supérieurs mais aussi d'une ouverture ronde ou carrée dans sa partie haute afin de remplir aisément lesdits sacs de matériau à grande inertie thermique, à savoir que lesdits sacs peuvent être en matériaux bio-sourcés ou synthétiques de taille et de volume quelconque en fonction des conditions idéales de pose facilitant la construction, la déconstruction, les manutentions par des hommes ou par des moyens de levages mécaniques, selon la possibilité ou pas d'utilisation d'un engin de levage, en ce que avantageusement dans le cas d'une d'un montage du kit de talutage dans une région ou un pays ne pouvant utiliser une aide mécanique de levage, on conseillera de réaliser le talutage avec des sacs d'un poids de 50 kg au maximum manipulables par deux hommes, il est à noter aussi qu'il est possible d'utiliser des sacs biodégradables dans le cas ou l'on ne prévoit pas de démontage du talutage.

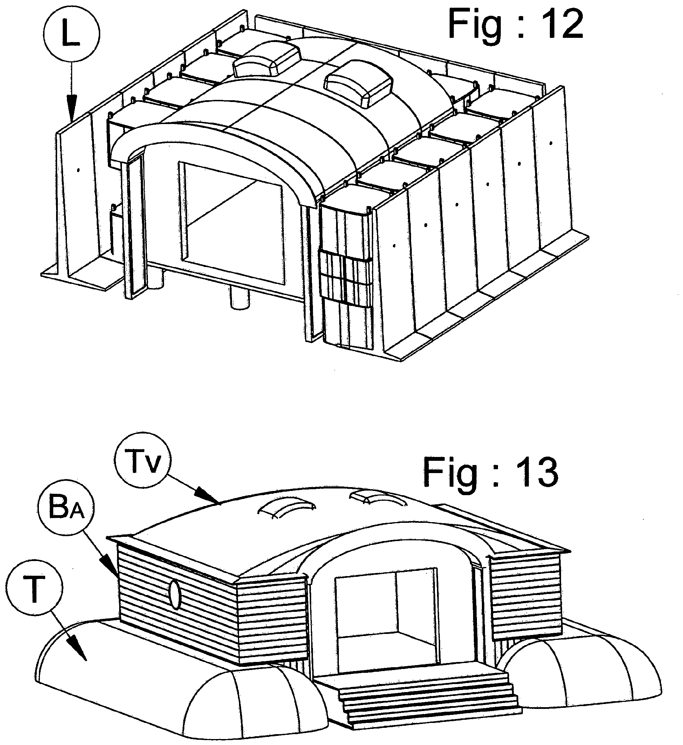

La méthode de talutage utilisée par l'invention propose des techniques de mise en place d'une formation massique de sacs de terre et d'une paroi de béton à semelle ou de pieux (figure 13), lesdits pieux de préférence sont réalisés avec des troncs de diamètre 10 à 15 cm en bois régional peu couteux comme du pin des landes souvent utilisé en retenu de terre et sable, on devra avantageusement déverser dans les interstices restant entre les sacs, les pieux, les palissades, les profilés béton à semelle et les murs de l'habitat au fur et à mesure des niveaux (figure 13), un agrégat léger et fluide de façon à ce qu'il descende aux pieds des tombants des murs et rejoigne le sol naturel en toutes zones de la surface des talus ainsi formés, et ceci de façon à éviter des poches d'air néfastes au rendement inertiel de l'enceinte massique par la création d'effondrement locaux du talus.

La méthode de talutage intègre avantageusement la pose de canalisations de drainage d'eau de pluie disposées en pied de talus et en aplomb des murs (figure 12 rep C et F), permettant aux talus de ne jamais être saturés d'eau écartant ainsi le risque de poussée sur les murs par dilatation de l'agrégat, mais aussi permettant de garder un effet d'éponge régulateur de l'humidité d'ambiante souhaitée au abord immédiat de l'habitat et ceci d'une façon maitrisée, en ce que la composition des agrégats du talus devant assurer une grande inertie thermique productrice de calories, ledit agrégat doit idéalement être composé de terre contenant de l'argile comme liant régulateur d'humidité, de gravier, de cailloux, de sable ou un mélange quelconque de minéraux, de billes d'argile, de pouzzolane, ou encore de tourbe pourvu que le rendement inertiel reste favorable au meilleur effet de retenue de calories. On peut aussi créer un mélange minéral et ou végétal, ou composite composé de matériaux synthétiques inertes non polluant, d'une filière de recyclage ou non.

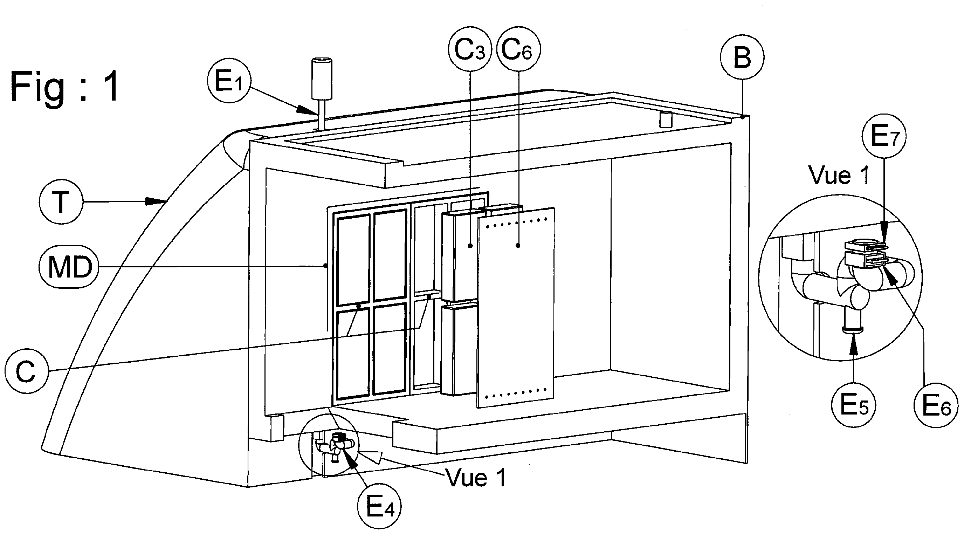

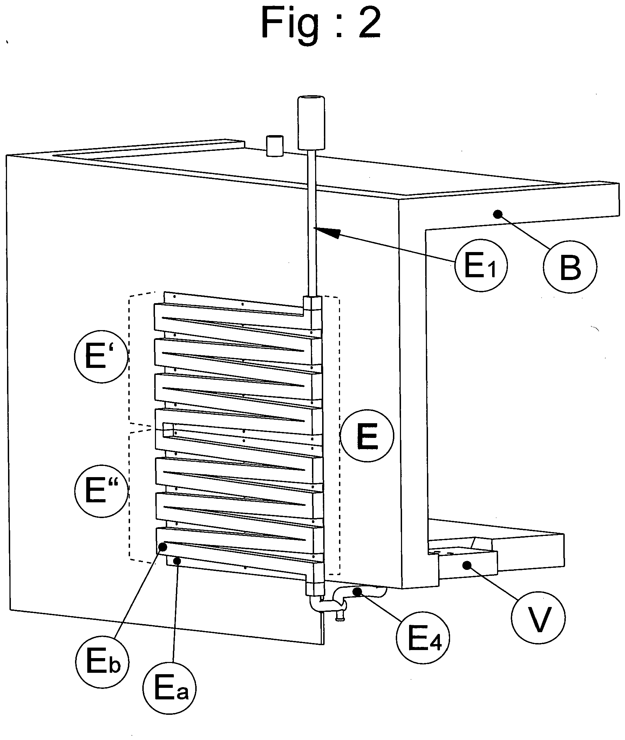

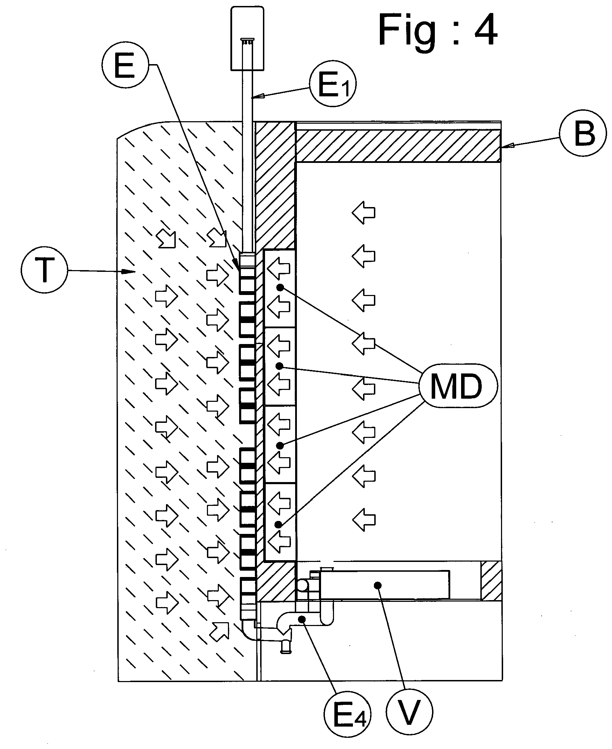

Ce talutage à vocation géothermique apporte avantageusement à l'art connu la possibilité de rendre bioclimatique un bâtiment ou habitat dans un apport d'isolation thermique et un apport d'énergie géothermique tout en demeurant démontable ou déconstructible, sans détérioration du bâtiment ou de l'habitat, en utilisant des agrégats provenant et restant sur le terrain en cas de déconstruction. La description sommaire des figures et des dessins aidera à comprendre les buts et avantages de la présente invention qui sont présentés dans l'exposé qui va suivre, en ce que l'invention sera plus facilement compréhensible avec un support visuel constitué de plusieurs planches techniques dites « Figures » constituées de vues en deux et trois dimensions, vues de sous ensembles éclatés ou en coupe, de sous ensembles complets ou partiels, de principes d'assemblages, de schémas de principes techniques, de détails techniques, sachant que ses supports sont non exhaustifs selon des modes de réalisation donnés à titre d'exemples préférés et que le demandeur les présente à titre non limitatif de tous procédés techniques, formes et volumes.
**Figure 1**
   représente une vue en perspective d'un exemple de bâtiment en coupe quelconque équipé du dispositif de climatisation passif 'géothermie sur mur diffusif' selon l'invention, on peut voir un bâtiment taluté par un massif de terre dont le volume en vue intérieure montre un mur diffusif en éclaté, la cheminée d'entrée d'air du collecteur sortant du talus de terre et la sortie d'air du collecteur arrivant dans un vide sanitaire.
   (B) étant un bâtiment quelconque avec vide sanitaire dont au moins 1 mur est taluté de terre (T), (MD) est un mur diffusif constituée de 2 caissons diffusif (C), (C3) est un bloc de matériau diffusif, (C6) est un panneau de fermeture de caisson diffusif, (E1) est la cheminée d'entrée d'air de l'échangeur collecteur, (E4) est une canalisation de sortie d'air de l'échangeur collecteur, (E5) est le purgeur de condensas, (E6) est un ventilateur d'insufflation vers l'intérieur du bâtiment, (E7) est un filtre.
**Figure 2**
   représente une vue en perspective du même bâtiment qu'en figure 1 mais en vue extérieur de façon à laisser apparaitre l'échangeur collecteur en détail, le massif de terre a été effacé permettant une vision précise.
   (B) étant un bâtiment quelconque avec vide sanitaire, (E) est un échangeur collecteur complet composé de 2 modules connectées (E'+E"), les modules sont constitués d'un serpentin (Eb) soudé ou collé sur une plaque diffusive (Ea), (E1) est la cheminée d'entrée d'air de l'échangeur collecteur, (E4) est une canalisation de sortie d'air de l'échangeur collecteur passant par le vide sanitaire et étant relié à un caisson de VMC (V) (ventilation mécanique contrôlée).
**Figure 3**
   représente une vue en perspective du même bâtiment qu'en figure 1 et 2 mais en vue filaire transparente avec son talus de terre afin de voir la position de l'échangeur collecteur en vis-à-vis du mur diffusif.
   (B) étant un bâtiment quelconque avec vide sanitaire, (T) un talus de terre, (E) est un échangeur collecteur, (E2) est l'embout filtrant de la cheminée d'entrée d'air de l'échangeur collecteur et (E3) son globe à effet de serre, (E4) est une canalisation de sortie d'air de l'échangeur collecteur passant par le vide sanitaire.
**Figure 4**
   représente une vue de face en coupe du bâtiment (B) déjà vu sur les figures 1, 2 et 3, permettant de comprendre d'une façon schématique le phénomène physique du déplacement des calories avantageusement utilisé dans l'invention grâce à une diffusion 'double effet' ou 'multi source', c'est-à-dire un premier apport d'énergie en migration représentée par des flèches creuses de la masse de terre (T) vers le collecteur échangeur (E) (de gauche à droite), puis un deuxième apport d'énergie représentée par des flèches creuses passant à travers le mur diffusif (MD) du volume chaud de l'habitat vers le collecteur échangeur (E) (de droite à gauche), (E1) est la cheminée d'entrée d'air de l'échangeur collecteur, (E4) est une canalisation de sortie d'air de l'échangeur collecteur passant par le vide sanitaire et étant relié à un caisson de VMC (V).
**Figure 5**
   représente une vue de face du bâtiment (B) déjà vu sur les figures 1, 2, 3 et 4 permettant de voir le collecteur échangeur (E) en position verticale collé à un mur diffusif (MD) selon l'invention, mais aussi un autre collecteur dans une variante de position angulée par rapport au mur permettant une utilisation plus optimisée en utilisation rafraichissante de collecteur échangeur et ceci de façon éloignée du bâtiment, (B) étant le bâtiment, (T) le massif de terre, (E) un collecteur échangeur à 90° et un autre (E) décollé du mur positionné avec un angle quelconque supérieur à 5°, (E4) la canalisation de sortie d'air du collecteur échangeur, (V) une VMC.
**Figure 6 et 6'**
   représente en deux schémas (du même principe) très détaillés permettant de voir et comprendre la limitation de la zone de couverture de la peau composite et le fait que la résine imprègne totalement le caisson de mur diffusif par un système d'encapsulage selon l'invention, en ce que ce procédé réalise un blocage physico-chimique par migration d'une matrice de type résine dans des renforts fibreux tissé ou non tissé sur une ossature bois utilisant les techniques de l'infusion, l'injection, le pressage sous vide d'air et une représentation en perspective et en coupe d'un 'caisson' encapsulé avec plus de détails permettant de bien se représenter le positionnement du renfort fibreux sur l'ossature bois et l'enveloppement de la résine tout autour de la structure dudit 'caisson'.
   - Les flèches (P) représentant le phénomène de fermeture du moule et la pression du vide sur l'ensemble des pièces encapsulées constituantes du 'caisson'.
   - (R') étant la représentation de la membrane liquide de résine infusée dans la partie creuse de la structure ossature bois du 'caisson'.
   - (S) une structure ossature bois constitué de profilés en nombre quelconque et de forme quelconque créant l'armature du 'caisson'.
   - (P) un panneau de fond de 'caisson'.
   - (F) étant la représentation de la couche de renfort de fibre tissée ou non tissée située sur toutes les faces dudit 'caisson' non orientées vers l'intérieur de l'habitat.
   - (R") étant la représentation de la membrane liquide de résine infusée sur la partie extérieure de la structure ossature bois et du panneau de fond dudit 'caisson'.
   - (R'+R") étant la représentation d'une enveloppe fermée par une migration de résine en tout point du caisson de mur diffusif rendant étanche par encapsulage lesdits caissons.
**Figure 7**
   représente une vue en perspective d'un éclaté d'un caisson diffusif prêt à poser, composé de :
   - (C1) en représentation d'un enveloppement composite constitué d'une matrice de résine et d'un renfort fibreux tissé ou non tissé.
   - (C2) en représentation d'une structure ossature bois.
   - (C3) en représentation de matière isolante et diffusive.
   - (C4) en représentation d'un réseau quelconque fluide et énergie.
   - (C5) en représentation d'une membrane technique.
   - (C6) en représentation d'un panneau décor de fermeture et finition.
   - (C7) en représentation de composants électriques ou divers équipements de tous types posés en incrustation.
**Figure 8**
   représente une vue en perspective d'une partie de bâtiment quelconque montrant la façon de réaliser un talus à inertie géothermique avec des sacs de terre retenus par une palissade.
   - (B) un bâtiment quelconque.
   - (E) un collecteur échangeur fixé sur son mur diffusif.
   - (T) empilage de sacs de terre.
   - (P) une palissade réalisé avec des pieux.
**Figure 9**
   représente une vue en perspective d'un bâtiment quelconque montrant le système de drainage des talus à inertie géothermique avant la pose des sacs de terre.
   - (T) des sacs de terre.
   - (D1) le réseau drainant.
   - (D2) représente un bourrelet de cailloux drainant recouvrant la canalisation drainante.
**Figure 10**
   représente une vue en perspective d'un bâtiment quelconque montrant un exemple de talulage périphérique jusqu'au tombant de la toiture, des collecteurs échangeurs étant pris en sandwich entre les sacs de terre et les murs du bâtiment.
   - (T) talus en ceinture de sacs de terre.
**Figure 11**
   - (P) représente un exemple de palissade de pieux de bois en soutènement de talus à inertie géothermique.
   - (T) représente des sacs de terre qui forment un exemple de contre talutage contrefort de la palissade (P).
**Figure 12**
   - (L) représente une variante de palissade à montage rapide en soutènement de talus à inertie géothermique sous la forme de paroi de 'béton en L' en forme d'aile à contre balancement.
**Figure 13**
   représente un exemple esthétique de bâtiment équipé de l'invention dont la toiture a été végétalisée (TV) et a recouvert les talus à inertie géothermique en débordement jusqu'au contact du sommet de la palissade, mais aussi un exemple de décoration des palissades de retenue de terre dans une variante de décoration de l'habitat par l'ajout d'un bardage extérieur (BA) fixé sur la palissade et d'une rive en casquette débordante en périphérie de la palissade, (T) étant un exemple de contre talutage végétalisé en contrefort de la palissade.
Comme présenté visuellement dans les figures et dessins, on trouvera ci-dessous un exposé détaillé d'un mode de réalisation préféré du dispositif qui comprend:
- Un collecteur échangeur (E) réalisé de préférence en pvc, ou polyéthylène, ou abs, chargé verre ou non, selon procédé d'injection plastique ou thermoformage et/ou chaudronnerie plastique tournage fraisage pliage utilisant la soudure ou le collage.

Collecteur (E) selon un mode préférentiel de fabrication mais non limitatif constitué de 2 pièces symétriques collecteur-serpentins (E',E") eux-mêmes constitués d'une plaque (Ea) thermoplastique rectangulaire de 2,5 x 1,2 m en épaisseur 4 mm servant de plaque diffusive de fermeture d'une canalisation en forme de U extrudé selon un chemin de type serpentin ou zigzag (Eb), les deux pièces étant assemblées par soudure ou collage formant une pièce (E') ou sa symétrie (E").

La forme de serpentin (Eb) circulant et de forme quelconque, et de toute valeur de surface et de section selon la performance et le débit recherché, ledit serpentin (Eb) est de 15 mètres minimum linéaire déployée par collecteur, le dit serpentin louvoyant selon une pente de 2 % minimum de haut en bas permettant aux condensas de ruisseler vers l'évacuation au point le plus bas du dispositif, la plaque support serpentin (Ea) sera fixée par collage sur le mur diffusif (MD) d'un bâtiment quelconque (B) sans poche d'air pour une meilleur diffusion des calories.

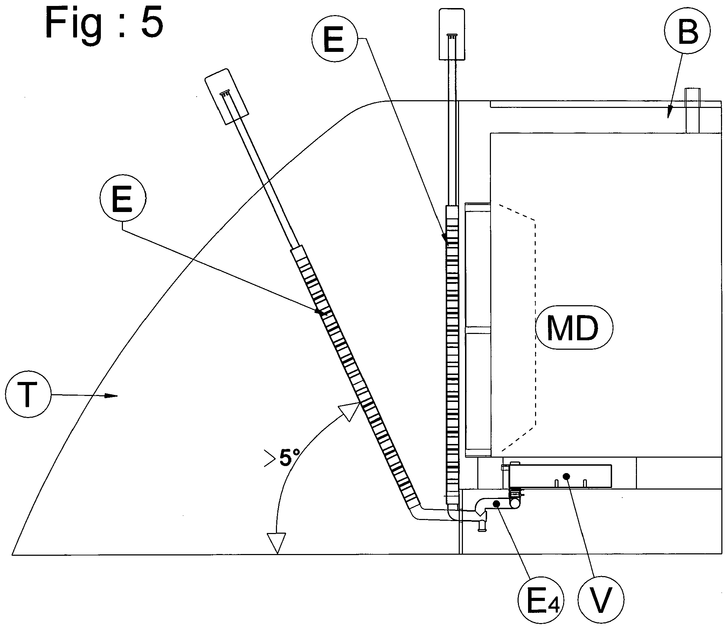

Deux aménagements sont réalisés sur le serpentin dont un en début de serpentin pour une connexion verticale étanche avec la cheminée de prise d'air (E1), et une autre connexion en sortie de serpentin pour une connexion avec la canalisation (E4) allant vers une VMC (V). Lesdits aménagements sont épaulés en forme ronde ou carré avec une collerette extrudée perpendiculaire permettant soit, la connexion de plusieurs collecteur-serpentins entre eux (E', E") soit par le même aménagement, la fixation d'une cheminée (E1) ou d'une canalisation (E4) allant à une VMC (V), ou bien encore des connexions de réseaux rigides ou souples quelconques de toute forme et toutes longueurs (fig 5, E4), à savoir que en fonction de la performance recherchée et de façon caractérisante on pourra accoupler plusieurs collecteurs (E) et ceci sur plusieurs murs si nécessaire, lesdits collecteurs peuvent être utilisés indifféremment pour la récupération de calorie à vocation chauffante ou frigories à vocation rafraichissante, en ce que la longueur possible et désirée du développé de la canalisation serpentin enterrée dépendra du nombre de collecteurs couplés et installés sur les murs de la maison.

Afin d'obtenir le gain de préchauffage classiquement connu par rapport à une installation de type puits canadien il faudra coupler 2 collecteur-serpentins (E', E") pour obtenir un collecteur échangeur dans le sens de la hauteur réalisant ainsi un circuit de canalisation de 30 mètres de longueur déployée (2 x 15 m), couvrant une surface d'échange thermique contre le mur diffusif de 2,5 x 2,4 m.
- Une cheminée de prise d'air (E1) de préférence en pvc, polyéthylène, abs, chargé verre ou non, ou bien Inox ou composite selon procédé chaudronnerie plastique et composite ou chaudronnerie métallique.

Cheminée selon un mode préférentiel de fabrication mais non limitatif constitué d'un tube thermoplastique extrudé rond ou carré en épaisseur 4 mm ou Inox épaisseur 1,5 mm de longueur quelconque nécessaire au surplomb de la végétation. Un filtre à poussière inséré dans un embout constituée d'une feuille roulée grillagé ou micro perforé recouvert d'un couvercle au bord retombant, ledit embout est assemblé en sortie de la cheminée par emboitage épaulé (E2).

Un globe à effet de serre (E3) en polycarbonate ou verre de couleur noir et de forme quelconque viendra avantageusement coiffer l'embout support filtre lorsque le collecteur sera utilisé pour une fonction de chauffage en saisons froides, ledit globe ne sera pas utilisé en fonction rafraichissante du dispositif, ledit globe est emboité sur la partie basse de l'embout support filtre et retenu par trois vis pointeau.
- Une canalisation de sortie d'air (E4) de préférence en pvc, polyéthylène, de forme quelconque permettant de traverser le massif de terre et de se connecter à un caisson VMC (V) situé dans une zone technique d'un bâtiment quelconque (B).

La canalisation est équipé d'un purgeur de condensas (E5) dans sa partie la plus basse, ledit purgeur peut être accessible dans un vide sanitaire, un sous sol, une cave ou un local technique.

La canalisation est équipée en option d'un filtre (E7) amovible en tiroir dans sa partie la plus proche du point de connexion à une VMC (V), mais aussi toujours en option d'un ventilateur (E6) amovible en tiroir dans sa partie la plus proche du point de connexion à une VMC (V), le tout (E6 et E7) pour une éventuelle utilisation autonome sans VMC, ou bien en appoint d'une VMC en manque de débit.

La canalisation (E4) est protégée par un matériau isolant thermique (non représenté) en gangue chaussette ou bobinée de protection extérieure permettant à l'air réchauffée dans le collecteur de ne pas perdre les calories gagnées durant leur transport vers la VMC (V).
- Un mur technique (MD) dit 'diffusif' enchâssé dans une réservation prévue pour l'installation du dispositif dans un mur quelconque d'un bâtiment (B). Ledit 'mur diffusif' (MD) est obligatoirement positionné en vis-à-vis d'un collecteur échangeur (E) double effet selon l'invention.

Dans un mode de réalisation préféré le mur diffusif (MD) est constitué de caissons alvéolaires (C) de taille standard pour faciliter la manutention le transport et le stockage, soit environ 2,5 x 1,25 x 0,2 m, sans limitation de forme de taille et de poids du moment que le résultat technique d'échange diffusif est obtenu en équivalent avec la surface des collecteurs (E) en symétrie.

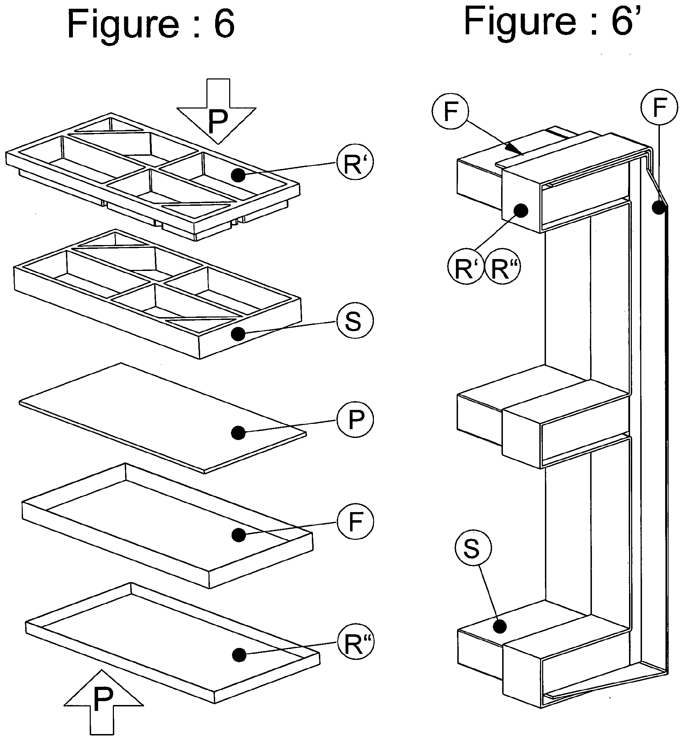

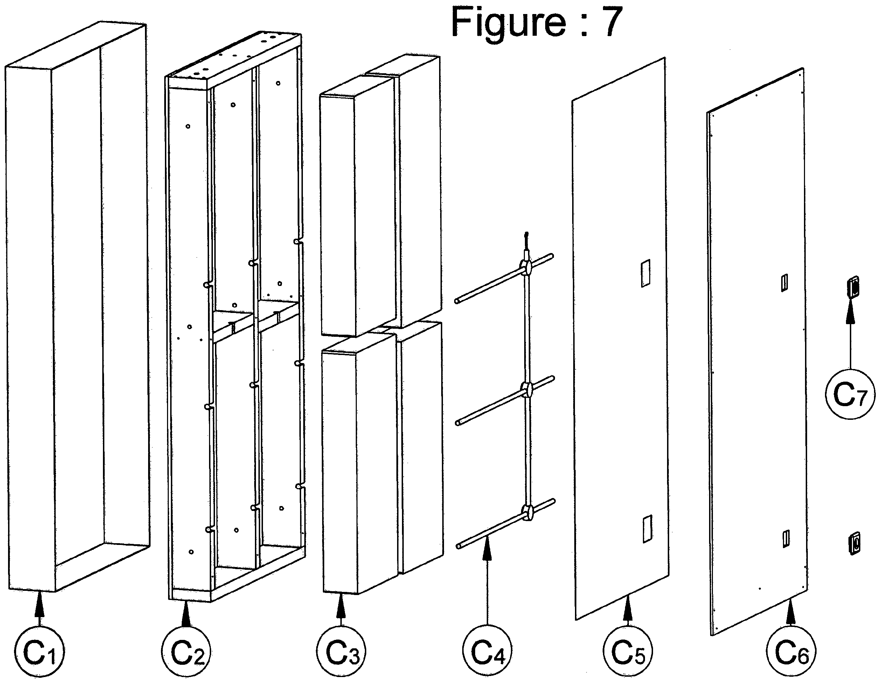

Dans un mode de réalisation préféré le mur diffusif (MD) est constitué de 2 caissons assemblés (C), réalisant ainsi une surface d'échange de 2,5 x 2,5 m en vis-à-vis de 2 collecteurs serpentins (E', E") réalisant 1 collecteur assemblé (E), l'échange étant ainsi optimisé, lesdits caissons diffusifs sont réalisés en matériaux composites selon la méthode suivante :
Assemblage en moule souple ou rigide fermé et étanche de :
   - 1 peau (fig 7, rep C1) d'étanchéité recouvrant tout le caisson sauf sa partie ouverte sur l'intérieur de la maison.
      La peau composite est constituée d'un support de fibre tissée ou non tissée de préférence d'origine bio-sourcée dans le cas d'un habitat bioclimatique (Lin Chomarat), en second choix d'origine minéral ou synthétique (fibre de verre, de basalte, de kevlar par exemple), lié par une matrice de résine polymère ou monomère de préférence bio-sourcée (Sicomin Composites) ou synthétique. La méthode de mise en oeuvre du composite sera l'infusion ou l'injection sous vide (fig 6,6') ou toutes autres méthodes permettant une bonne cohésion matrice/fibre et bois de la structure caisson.
   - 1 panneau de fond cintrée ou rectiligne (fig 6, P) structurel anti poinçonnement d'épaisseur 15 à 22 mm au minimum.
      Panneau en bois reconstitué de copeaux ou fibres bio-sourcés de préférence, compressés avec une colle bio-sourcée de préférence ou synthétique, ou encore un panneau en feuille de bois lamellé collé avec colle bio-sourcée de préférence ou synthétique, ou bien en matériau composite monolithique tissé ou non tissé bio-sourcé ou synthétique ou tous autres matériaux bio-sourcés ou synthétiques répondant aux exigences structurelles de la destination, en épaisseur nécessaire pour résister à la charge de la poussée de terre du talus et à un poinçonnement.
   - Au moins 3 piliers (fig 7, C2) collés vissés sur le panneau de fond (fig 6, P) Piliers en matériau structurel de section rectangulaire plein ou alvéolaire, de forme I ou U, extrusion continue ou évolutive, de préférence en bois de charpente massif ou lamellé-collé, en Mélèze, Douglas ou Pin pour l'Europe, ou en bois équivalent structurellement selon le pays de production. Le bois devra être stabilisé géométriquement et sec à 12 % +/- 2% ou rétifié pour une bonne cohésion lors de l'encapsulage (fig 6,6') composite sous vide avec l'ensemble des pièces du caisson. Le séchage et la stabilisation du bois pouvant se faire en autoclave sous vide, en séchoir à bois, ou par toute autre technique permettant le même résultat. Les profils peuvent aussi être composés de tous types de matériaux assurant un rapport poids résistance mécanique équivalent, matériaux inertes ne dégageant pas de cov et imputrescible.
      Les piliers sont usinés numériquement d'au moins 3 rainures permettant le passage du réseau d'énergie ou fluide et d'au moins 3 passages de boulons.
   - Au moins 2 traverses horizontales constituées du même matériau que les piliers, collées vissées reliées et solidarisées avec les piliers et le panneau de fond par liaisons mécanique de type vis et/ou goupilles et colle structurelle bio-sourcée ou synthétique. Les traverses sont usinées numériquement d'au moins 4 passages de goupilles de centrage et boulons d'assemblage inter caissons (fig 7, C2).
   - Au moins 2 traverses entretoises constituées du même matériau que les piliers créant des alvéoles collées vissées reliées et solidarisées avec les piliers et le panneau de fond par liaisons mécanique de type vis et/ou goupilles et colle structurelle bio-sourcée ou synthétique. Les traverses sont usinées numériquement d'au moins 1 rainure permettant le passage du réseau d'énergie et fluide.
   - Au moins 4 volumes de matériau d'isolation amovible à charge et décharge lente à bonne diffusivité, forte densité de compactage, par exemple en laine de bois (C3), sans limitation de nature du moment que l'on utilise un matériau d'isolation thermique et phonique performant bio-sourcé et végétal de préférence ou minéral ou synthétique, ledit matériau peut être constitué d'un seul matériau ou d'un feuilleté ou encore d'un agrégat multi matériaux, en épaisseur et densité quelconque selon le résultat recherché, thermique, inertiel, phonique, régulation du taux d'humidité en fonction du climat de la région.
   - Un réseau de gaines (fig 7, C4) de passage du réseau électrique ou fluide, horizontal et vertical relié par des boitiers de dérivations étanches. Les extrémités des gaines sont reliées entre caissons par un manchon d'étanchéité souple ou rigide collé ou non.
   - Au moins 1 membrane (fig 7, C5) en textile technique servant de barrière aux poussières de l'isolant (C3), éventuellement de par-vapeur ou toutes autres fonctions techniques pouvant être favorable au rendement, ledit textile fixé par agrafage ou clipsage périphérique.
   - Au moins 1 panneau décor interchangeable (fig 7, C6) d'épaisseur de 3 à 10 mm, composé d'un bois reconstitué de copeaux compressés ou feuilles lamellé-collées avec colle bio-sourcé ou synthétique, plastique technique inerte ou alliage métallique ferreux ou non ferreux, ou bien encore de panneau sandwich mixte plastique inerte/aluminium, ou tout composite bio-sourcé ou non constitué de fibre et résine inerte de préférence sans émanation de cov. Le panneau sera aménagé par usinage ou non de passage de boitier interrupteur, luminaires ou ventilation chaud froid ou prise secteur ou encore tous types d'aménagements utiles à l'équipement de la maison. Le panneau est de préférence livré décoré d'un motif en matière quelconque de préférence sans dégagement de cov et/ou d'une couleur, il est fixée par vis amovible et cache tête de vis. Un film décoratif ou lambris bois ou synthétique pourra recouvrir la plaque. Le panneau peut être constitué d'une simple plaque brute en bois reconstitué, lié par une colle bio-sourcée de préférence et revêtue d'un lambris bois collé ou vissé.

Le panneau décor ne devant pas faire barrière au passage des calories de l'intérieur de l'habitat vers les matériaux diffusif situés à l'intérieur des caissons (C) formant le mur diffusif (MD), le choix de tous les matériaux constituant le panneau de fermeture et sa partie décorative devra être conditionné par une réelle diffusivité, les épaisseurs doivent être prises en compte et des aménagements du panneau comme des micro perforations ou bien toutes découpes favorables à l'échanges de calories et de la vitesse de transfert sont possibles sans limitations de formes et de taille.

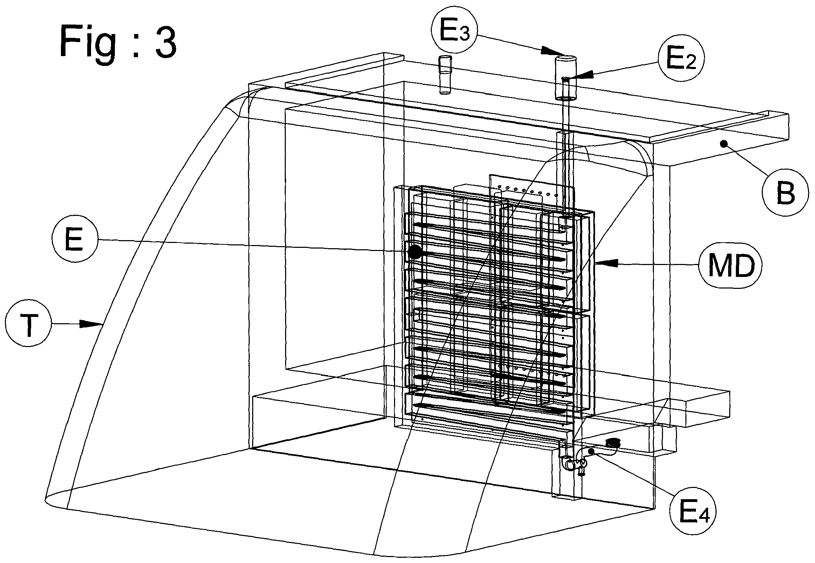

La préparation du chantier de montage du dispositif sur un bâtiment ou habitation est aussi une phase importante à décrire, en ce que systématiquement une réservation rectangulaire doit être prévue par l'architecte pour un bâtiment neuf ou un aménagement et ceci dans le ou les murs destinés à recevoir le dispositif 'mur diffusif' (MD) (fig 1 et 3).

Dans le cas d'un habitat neuf, l'architecte ou le constructeur connait les dimensions hors tout du mur diffusif et le jeu à prévoir pour solidariser l'équipement à la construction.

Sur une construction classique béton un cadre châssis béton avec une poutre haute sera aménagé de la même façon que dans le cas d'une baie vitrée, on y installera le dispositif mur diffusif en s'assurant de l'étanchéité avec l'extérieur selon les techniques connues de l'étanchéité des sous sol enterrés, résine synthétique et bande de jonction fibrée.

Sur une construction ossature bois l'architecte devra seulement intégrer et solidariser le dispositif mur diffusif (MD) dans son mur ossature bois au moment de la construction de la totalité du mur en atelier. Le mur intégrant le dispositif devra être revêtu sur toute la future zone talutée côté extérieur d'une peau composite et de façon optionnel d'une bâche totalement étanche et imputrescible de type toiture végétalisée et ceci sur toutes les parties en dehors des serpentins du dispositif afin de ne pas bloquer la migration des calories.

Dans le cas d'un habitat ancien l'architecte et/ou l'artisan connait les dimensions hors tout du mur diffusif et le jeu à prévoir pour solidariser l'équipement à la construction.

Sur une construction classique béton une découpe sera réalisé puis un cadre châssis béton avec poutre haute sera aménagé de la même façon que pour une baie vitrée, on y installera le dispositif mur diffusif (MD) en s'assurant de l'étanchéité avec l'extérieur selon les techniques connues de l'étanchéité des murs de fondations talutés de terre, résine synthétique et bande de jonction fibrée, ou autres techniques connues de l'art de l'étanchéité du bâtiment.

Sur une construction ossature bois, l'architecte ou le menuisier devra réaliser dans le mur existant une découpe et un cadre bois structurel pour le temps du chantier. Les caissons (C) du dispositif mur diffusif étant structuraux, une fois qu'ils seront intégrés et solidarisés par des techniques d'assemblages de l'ossature bois traditionnelle, l'ensemble du mur retrouvera au minimum ses caractéristiques mécaniques porteuses initiales connues lors de la construction en atelier, la zone devant être talutée sera structurellement plus résistante aux déformations par poussée horizontale et perforations. Le mur qui intégrera le dispositif devra être entièrement revêtu d'une peau composite et/ou d'une bâche étanche et imputrescible de type toiture végétalisée sur toutes les parties en dehors du dispositif qui devront rester en contact avec la terre.

La création de la formation massique de terre à vocation de géothermie est le dernier sous-ensemble à mettre en place pour que le dispositif soit opérationnel. Le talutage (T) en vis-à-vis du dispositif collecteur double effet et de son mur diffusif est la troisième partie nécessaire au fonctionnement du système 'Géothermie sur Mur Diffusif', la formation massique de terre servant de réservoir diffusif à calories naturelles donnant le premier gain du système multi source.

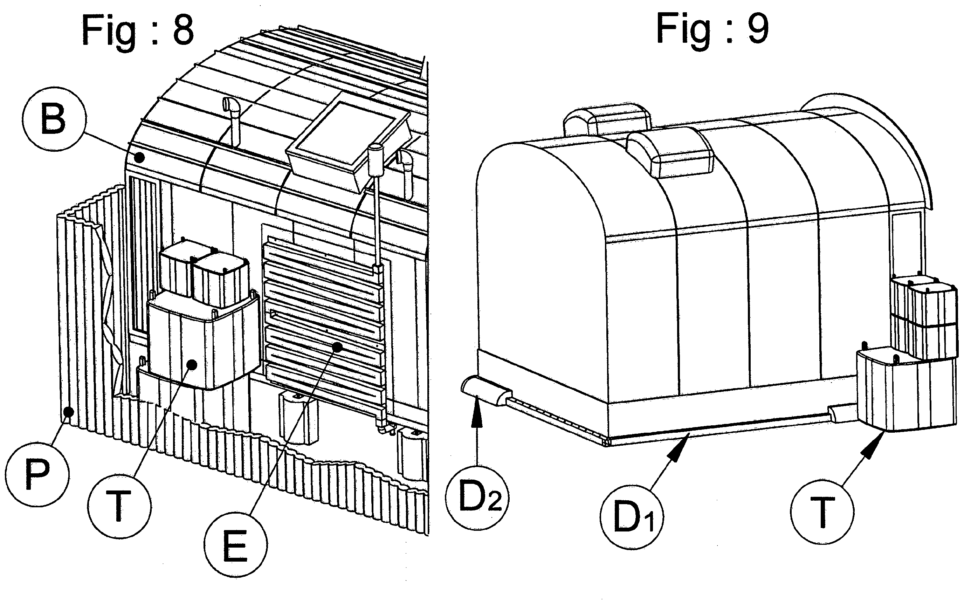

Cette partie du système est aussi importante que les deux autres pièces maitresses que sont le 'collecteur échangeur' (E) et le 'mur diffusif' (MD), en ce que de la conception du talutage (Fig 8 à 13) à travers ses matériaux et son positionnement contre le bâtiment impactera le rendement du dispositif de préchauffage ou rafraichissement de l'air de renouvellement de l'habitat. L'orientation de l'habitat par rapport au sud est importante pour une maison bioclimatique, l'apport du réchauffement solaire sur les ouvertures vitrées à aussi son importance (Fig 8), de même que la situation du talus intégrant le dispositif selon l'invention.

En fonction de la forme du terrain et de son orientation, des arbres environnant, des ombres portées, des couloirs de vent, il faudra bien étudier la meilleure position d'un talutage à vocation chauffante et d'un autre à vocation rafraichissante, sachant que le meilleur rendement sera obtenu en utilisant deux dispositifs distincts, mais qu'il est possible d'utiliser un seul dispositif 'deux en un' qui du fait de son emplacement définitif ne pourra obtenir un rendement maximum dans ses deux fonctions possibles.

Pour un talutage sur un terrain de grande surface, la technique de construction la moins cher sera un simple remblai de talutage en forme de colline lissée jusqu'au niveau de la toiture du bâtiment (Fig 1 et 3). Dans le cas d'un habitat disposant d'une toiture végétalisée, on pourra ne pas utiliser le talus droit retenu par une palissade comme expliqué dans les figures de 8 à 13, mais réaliser un talus en forme de colline qui rejoindra la toiture végétalisé ne faisant plus qu'un seul tapis végétal.

Afin de retenir la terre et lutter contre un glissement inter plaque ou phénomène de ravinement en attendant l'ancrage par la végétation, il est conseiller de planter quelques pieux de bois dans le massif et/ou d'insérer des matelas en portefeuille de géotextile selon la technique du génie civile des bords de voies routières. Un compactage de l'agrégat devra être réalisé dans la partie proche du collecteur sur mur diffusif dans un rayon d'au moins 1,5 m autour du collecteur, et ceci afin d'éviter les poches d'air néfaste à une bonne inertie et effet diffusif du massif. Sur la partie du talus au contact direct du collecteur échangeur (E) il faudra faire attention de bien remplir toutes les cavités autour de la canalisation serpentin avec une terre fine et argileuse que l'on compactera à la truelle fine au fur est à mesure de l'élévation du remblai taluté de façon à assurer une parfaite cohésion et diffusion du remblai de terre caillouteux avec vers la terre fine en coquille du collecteur.

Pour un talutage sur petit terrain ou selon besoin de design architectural, préférentiellement, les talus seront avantageusement formés d'un assemblage de sac rempli d'agrégat vibré compacté communément appelé sac 'bigbag', lesdits sacs sont des contenants avec boucles de manutention en textile technique ou géotechnique de préférence bio-sourcé ou synthétique de toutes formes et tailles et volumes idéales facilitant la construction, la déconstruction, les manutentions par des hommes ou par des moyens de levages mécaniques.

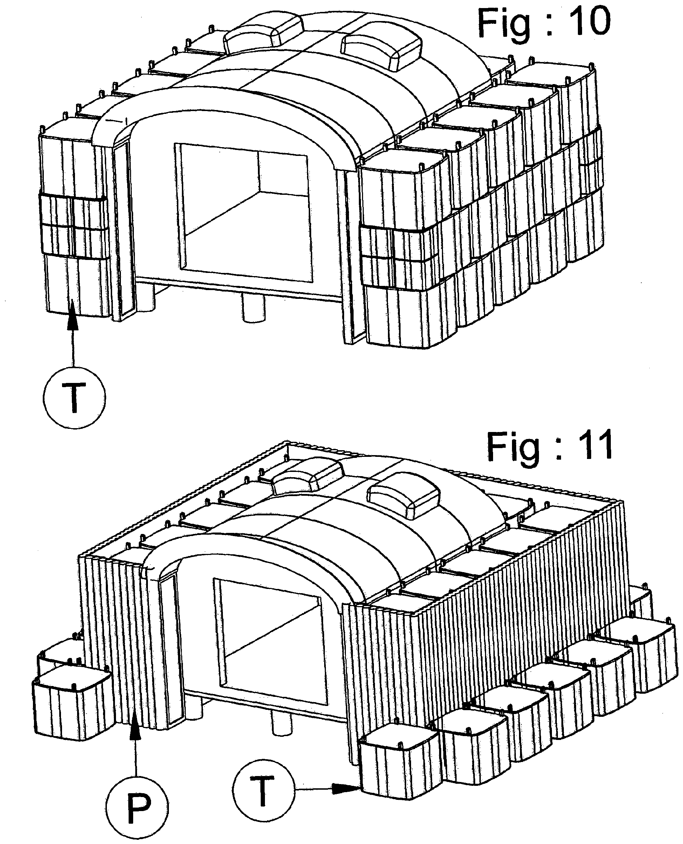

Ils seront empilés, juxtaposés, alignés en en quinconce (Fig 10), lesdits sacs seront bloqués en translation par des palissades de pieux en bois (Fig 8 et 11 rep P) ou par des profilés de béton à semelle (Fig 12 rep L), afin de supprimer des poches d'air néfastes à la géothermie, de la terre fine remplira les interstices entre les sacs, les pieux, les palissades, les profilés béton à semelle et les murs.

On utilisera idéalement des sacs en forme de cubes déformables(Fig 8 et 9 rep T) ou de parallélépipèdes rectangles en tissu de préférence géotextile de 1 m3 de volume dotés de boucles de manutention aux quatre coins supérieurs mais aussi d'une ouverture ronde ou carrée dans sa partie haute afin de remplir aisément lesdits sacs de matériau à grande inertie thermique, à savoir que lesdits sacs peuvent être en matériaux bio-sourcés ou synthétiques et de taille et de volume quelconque en fonction des conditions idéales de pose facilitant la construction, la déconstruction, les manutentions par des hommes ou par des moyens de levages mécaniques, selon la possibilité ou pas d'utilisation d'un engin de levage, en ce que avantageusement dans le cas d'une d'un montage du kit de talutage (Fig 10 et 11) dans une région ou un pays ne pouvant utiliser une aide mécanique de levage, on conseillera de réaliser le talutage avec des sacs d'un poids de 50 kg au maximum manipulable par deux hommes, il est à noter aussi qu'il est possible d'utiliser des sacs biodégradables dans le cas ou l'on ne prévoit pas de démontage du talutage.

En phase finale après l'empilage de tous les sacs constituant le talutage, avantageusement au moins 1 bâche géotextile (non représentée) sera insérée dans la construction de préférence dans la partie proche de la couche végétalisée de surface afin de créer un phénomène de canalisation d'eau de pluie contrôlé, mais aussi un autre phénomène de couvercle respirant retenant un certain taux d'humidité indispensable à une bonne cohésion de l'agrégat en cas de sécheresse prolongée, cohésion utile à l'inertie et la diffusion.

Dans le cas d'une réalisation d'un mur taluté en palissade bois ou béton sur toute la longueur d'un côté d'une habitation (Fig 10, 11, 12), il est conseillé de respecter pour un bon effet géothermique une épaisseur de terre devant et autour du ou des collecteurs d'un minimum de 1,2 m.

Il est aussi conseillé pour garantir le meilleur rendement du massif de terre 'réservoir d'énergie' que les agrégats formant le talus doivent de préférence être composé de terre contenant de l'argile comme liant régulateur d'humidité, de gravier, de cailloux, de sable ou un mélanges quelconques de minéraux, de billes d'argile, pouzzolane, ou encore de tourbe pourvu que le rendement inertiel reste favorable au meilleur effet de captation et stockage de calories. On peut aussi créer un mélange minéral et ou végétal, ou composite composé de matériaux synthétiques inertes non polluant, d'une filière de recyclage ou non.

## Revendications

1. Dispositif de climatisation passif multi source destiné à chauffer ou climatiser totalement ou partiellement un bâtiment ou une habitation à destination passive (B) comprenant un collecteur échangeur double effet dit 'géothermie sur mur diffusif' (E) constitué d'un ou plusieurs collecteur-serpentins (E', E") connectés entre eux ayant fonction de collecteur échangeur dans un sandwich terre à inertie (T) canalisation d'air (E) mur diffusif (MD), en partie haute ledit collecteur est équipé d'une cheminée d'entrée d'air (E1) dotée d'un filtre en son extrémité (E2), ledit filtre étant coiffé d'un globe à effet de serre amovible (E3), en partie basse ledit collecteur est équipé d'une canalisation de sortie d'air (E4) dotée d'un purgeur de condensat (E5), d'un ventilateur (E6) et d'un filtre (E7), le tout pouvant être relié à un équipement de ventilation mécanique contrôlée (V), ledit collecteur (E) réalise son premier gain par une source provenant d'un échange géothermique avec la formation massique de terre (T) qui l'entoure, en parallèle et dans le même temps, de façon à assurer un deuxième gain de source de type échange thermique, le collecteur (E) est avantageusement fixé au contact sur toute sa surface contre des caissons alvéolaires diffusants (C) qui forment une zone technique de mur diffusif (MD) en vis-à-vis du collecteur (E), ledit mur diffusif est chargé par l'intérieur de l'habitat de matériaux isolant et diffusif amovible (C3), le dispositif (E + MD) collecteur et son mur diffusif formant un ensemble qui est solidarisé à un bâtiment (B) taluté par une formation massique de terre à haute inertie en contrefort (T) en vis-à-vis du dispositif.

2. Dispositif selon la revendication 1 **caractérisé en ce que** le collecteur (E) est plaqué sans poche d'air et solidarisé obligatoirement à la paroi de mur diffusif (MD), mécaniquement par boulonnage et stratification collage composite structurelle de résine époxy de préférence bio sourcée, le bâtiment (B) équipé du dispositif étant doté de préférence d'un vide sanitaire d'une hauteur minimale de 60 cm permettant le passage des canalisations de transport de l'air (E4) et une aération permanente sous plancher dalle, de ce fait la partie inférieure comportant la sortie d'air vers (E4) du collecteur (E) étant positionné à une distance du niveau zéro du sol naturel 'sans creuser' de 60 cm +, soit entre 80 cm et 90 cm du niveau zéro de la construction.

3. Dispositif selon la revendication 1 **caractérisé en ce que** le collecteur (E) est constitué de PVC épaisseur de 2 à 3 mm d'un conductibilité thermique λ à 0,17W/mK, **en ce que** ledit collecteur récupère initialement les calories de la formation massique dans lequel il est enfoui par un pompage de calories côté talus de terre (T) pour une conductibilité thermique λ du massif d'environ 0,65/mK sur une base d'agrégat entre 15% à 40% d'humidité composé d'environ 25% d'argile, et qu'en plus, qu'il récupère côté mur sur lequel il est en contact par effet Fourier, les calories produites à l'intérieur de l'habitat transmises par le mur à diffusion lente et contrôlée (MD), ledit dispositif additionnant ainsi les deux apports calorifiques, **en ce que** selon la loi de Fourier une migration naturelle des calories d'un volume interne d'habitat à 20° de température ambiante, ira du mur diffusif (MD) vers la terre du talutage plus froide par transfert thermique via diffusion à travers les matériaux en sandwich en parfait contact le constituant, soit à travers : la peau composite étanche d'épaisseur 0.5 mm réalisée sous vide (C1) étant constituée à 30% d'une matrice en résine époxy bio sourcée à 0.25W/mK (R") et d'un renfort de fibre de lin à 0.05W/mK (F), le panneau en bois reconstitué de copeaux compressée à 0.13W/mK (P), les blocs d'isolation de matière diffusive en laine de bois à 0.04W/mK (C3), la membrane par vapeur à 0.02W/mK (C5), la plaque de fermeture ajourée du caisson en cellulose compressée à 0.07W/mk (C6).

4. Dispositif selon la revendication 1 **caractérisé en ce qu'**il est modulable et évolutif par fragmentation grâce à la possibilité d'optimisation **en ce que** l'on peut connecter plusieurs serpentins (E', E") entre eux selon le rendement recherché avec son mur diffusif (MD), lesdits serpentins de 15 mètres minimum linéaires déployés (E') formant collecteur de 30 mètres (E) et plusieurs collecteurs formant réseaux de collecteurs autour d'un habitat (B) à vocation de chauffage ou rafraichissement, lesdits collecteurs étant placés judicieusement de façon désolidarisés ou non en fonction du rendement maximum été ou hivers recherché, et ceci de façon autonome désolidarisée différenciée en spécialisation chaud ou froid, **en ce que** avantageusement on placera un ou plusieurs dispositifs collecteurs (E) rafraichissants dans un talus reconnu frais l'été et d'autres (E) à vocation de chauffage dans un talus reconnu plus chaud l'hiver car très exposé au rayonnement solaire, protégé des vents et de bonne capacité inertielle.

## Patentansprüche

1. Multi-Source-Einrichtung für Passiv-Klimaanlagen, sie dient der kompletten oder teilweisen Erwärmung oder Kühlung eines Passiv-Hauses (B), die Einrichtung besteht aus einem Luft-Wärmetauscher Verteilers mit Doppelwirkung (E) bestehend aus einem oder mehreren miteinander verbundenen Rohrschlangen (E', E") sie haben die Funktion eines Luft-Wärmetauscher Verteilers zwischen Wärmeträgheits-Böden (T) Luftleit-Elementen Wand (MD) mit Wärmeleitvermögen, Im oberen Teil verfügt der Luft-Wärmetauscher Verteilers über eine Lufteinleitung (E1) mit einem Filter (E2) und mit einer beweglichen Glaskuppel umgeben, die einen Treibhaus-Effekt bewirkt (E3), Im unteren Teil verfügt der Verteiler über eine Luftausleitung (E4) mit einem Kondesationsableiter (E5), einem Ventilator (E6) und einem Filter (E7), das Ganze ist mit verbunden Belüftungssystem (V), der Luft-Wärmetauscher Verteilers (E) bezieht den ersten Wärmegewinn durch geothermischen Austausch mit der umgebenden Erdbodenmasse (T), gleichzeitig entsteht ein zweiter Wärmegewinn durch den Wärmeaustausch, über die gesamte Oberfläche des Luft-Wärmetauscher Verteilers ist mit leitenden diffusionswand verbuden (MD), die somit schon vor dem Verteiler eine Verteiltechnik technische Zone bilden (E), die DiffusionsWand ist gefüllt im Haus mit Dämmstoffen und abnehmbar (C3), die Einrichtung besteht (E + MD) mit der Wärme leitendend Wand bilden ein mit dem Haus (B) verbundenes Ensemble, die haus wird durch den Erdboden und einer gegenüber liegenden (T) Erdaufschüttung mit hoher thermischer Trägheit unterstützt.

2. Die Einrichtung gemäss Anspruch 1 kennzeichnet sich dadurch aus, Luft-Wärmetauscher dass sie ohne Zwischenraum fest mit der Wärme leitenden Wand (MD) verschraubt ist, die strukturelle Verbindung besteht aus Epoxidharz vorzugsweise biologischer Herkunft, das mit dieser Einrichtung ausgestattete Gebäude (B) sollte möglichst über einen Hohlraum mit einer Mindesthöhe von 60 cm ermöglicht den Durchgang von Luftkanälen (E4) und eine kontinuierliche Belüftung unter den Fußbodenlatten erlaubt, (E4) ist 60 cm vom natürlichem Boden, der untere Teil des Verteilers (E) wird zwischen 80 und 90 cm unter dem Fundament des Gebäudes ohne Grabung positioniert.

3. Die Einrichtung gemäss Anspruch 1 kennzeichnet sich dadurch aus Luft-Wärmetauscher Verteiler (E) besteht aus PVC mit einer Dicke von 2 bis 3 mm, die Wärmeleitung wert von λ 0,17W/mK, Ursprünglich bezieht der Verteiler die Wärme erholen aus dem ihn umgebenden Boden (T) durch die Wärmerückgewinnung der seitlichen Erdaufschüttungen, die Wärmeleitung des Erdbodens beträgt ungefähr λ von 0,65/mK auf der Basis eines Verfassung des Bodens von 15% bis 40% Feuchtigkeit und ca. 25 % Ton, der Luft-Wärmetauscher Verteilers erholt sich die Kalorien bezieht zusätzlich gegen der DiffusionsWand durch einen Fourier-Effekt die im Inneren des Gebäudes entstehenden Kalorien die sich durch die Wand langsam und kontrolliert verbreiten (MD), die Einrichtung addiert zwei Wärmezufuhren, sich dadurch aus Gemäß dem Fourier-Gesetz erfolgt eine natürliche wärmeerzeugend bei einem Gebäudevolumen mit einer vorherrschenden Temperatur von 20°C, der Wärmestrom wird von der DiffusionsWand zum kälteren Erdhügel gehen (MD), durch die luftdicht aufgebrachte, wasserdichte Komposite-Beschichtung von 0,55 mm, die Beschichtung besteht zu 30% aus einer Matrix mit Bio-Epoxid-Harz von 0.25W/mK (R") und einer Verstärkung aus Leinenfasern von 0.05W/mK (F), die Tafel besteht aus Pressholz von 0.13W/mK (P), die Isolation besteht aus Holzwolle von 0.04W/mK (C3), Dampfmembrane von 0.02W/mK (C5), die durchbrochene Verschlussplatte des Kastens ist aus gepresster Zellulose von 0.07W/mk (C6).

4. Die Einrichtung gemäss Anspruch 1 kennzeichnet sich dadurch aus, dass sie modulierbar ist, sie kann durch Fragmentierung weiter ausgebaut warden, es besteht die Möglichkeit zur Optimierung der Einrichtung mittels Verbindung mehrerer Rohrschlangen miteinander (E', E"), je nach gewünschter Leistung der DiffusionsWand (MD), die Rohrschlangen von mindestens 15 m (E') bilden einen Luft-Wärmetauscher Verteiler von 30 m (E) und mehrere Luft-Wärmetauscher Verteilers bilden ein Verteilernetz zum Heizen oder Kühlen eines Hauses (B), die Luft-Wärmetauscher Verteiler (E) werden sorgfältig, gemeinsam oder einzeln, je nach einem im Sommer oder Winter gewünschten Ergebnis platziert, vorzugsweise sind eine oder mehrere Einrichtungen zur Erwärmung (E) an einer im Winter eher warmen Abböschungen zu platzieren, sonneneinstrahlung ausgesetzt, vor Wind geschützt, mit guter thermischer Trägheit.

## Claims

1. Multi-source device for passive air-conditioning system serves the complete or partial heating or cooling of a building or a passive house (B) including a heat exchange collector with a double action says "geothermal on diffusive wall" (E) composed of one or several pipe coils (E',E") connected to one another and have the function of a distribution manifold heat exchanger inside soil inertia sandwich (T) air-conducting element (E) diffusive wall (MD), in the upper part said collector is equipped by a chimney air inlet (E1) fitted with a filter at the end (E2), said filter headed by a movable glass dome which creates a radiation feedback (E3), in the lower part said collector is equipped by an air outlet pipe (E4) fitted with condensate trap (E5), a fan (E6) and a filter (E7), the whole may connect to a controlled mechanical ventilation system (V), said collector (E) generates his first heat gain by a source originate from geothermal exchange with the soil mass (T) that surround, in parallel and in same time, to ensure that a second heat gain from thermal exchange source, the collector (E) is advantageously entire contact surface attached to honeycomb diffusive heat-conducting boxes (C) which forms a diffusive wall technical zone (MD) facing the collector (E), said diffusive wall is loaded from the inside of the house with insulating and diffusive detachable materials (C3), the device (E + MD) collector and his diffusive wall form an ensemble connected to a building (B) buried by a support earth mass high thermal inertia (T) facing the device.

2. Device according to claim 1 **characterized in that** the collector (E) is pressed without any air gap and gathered together necessarily to the exterior wall part of diffusive wall (MD), bolted and laminated bonded composite of structural epoxy resin preferably bio based, the building (B) equipped with this device is fitted preferably by a crawl space with a minimum height of 60 cm which allows ventilation pipe passage (E4) and a continuous aeration under floor slab, hence the inner part comprising air outlet towards (E4) of the collector (E) is positioned from a 60 cm distance of zero natural ground level 'without digging', between 80 cm and 90 cm of the zero building level.

3. Device according to claim 1 **characterized in that** the collector (E) is made of 2 to 3 mm thickness PVC with a λ to 0.17W/mK recovers initially heat calories from the earth masses surrounding it in which it is buried according to old art, by heat recovery from side soil embankment (T) with thermal conductivity λ of soil backfill about 0.65W/mK on the basis of an aggregate state of 15% to 40% moisture and about 25% clay compound, in addition, it recovers calories wall side witch it is in contact by Fourier effect, generated inside the building transmitted by the slow diffusion wall and controlled (MD), said device thus adding the two calorific intakes, **in that** according to the Fourier law a natural caloric intake occurs from an internal building volume with a prevailing temperature of 20°C, will go to the diffusive wall (MD) towards the earth deposit cooler by a thermal transfer by spreading throught sandwich materials into perfect contact witch constitute, either throught, waterproof vacuum laminated coating of 0.5 mm (C1) consists of 30% of epoxy resin bio based matrix to 0.25W/mK (R") and a reinforcement of flax fiber to 0.05W/mK (F), the panel is a oriented strand board of 0.13W/mK (P), the wood fiber insulation diffusive material blocs to 0.04W/mK (C3), vapour barrier to 0.02W/mK (C5), the perforated closure panel of the woodframe wall is made of pressed cellulose to 0.07W/mk (C6).

4. Device according to claim 1 **characterized in that** it is modular and scalable by fragmentation thanks to the possibility to optimize **in that** can connect several pipe coils (E',E") to one another depending on the desired performance with his diffusive wall (MD), said pipe coils of 15 meter linear minimum deployed (E') form a collector of 30 meter (E) and several collectors form grids collectors around a bulding (B) for heating or refreshing, said collectors are placed appropriately disassociated or not according to a result desired in summer or in winter, in autonomy detached differentiated according to heat or cold specialization, **in that** advantageously we will place one or several refreshing collector devices (E) inside a known cold mound in summer and others (E) for heating inside a known mound which is warmer in winter because it is highly exposed to solar radiation, and protected from winds with good inertial capacity.
